# EUROPEAN PATENT APPLICATION

(11) **EP 1 102 225 A2**
(43) Date of publication of application: **23.05.2001**
(21) Application number: 00309547.8
(22) Date of filing: 30.10.2000
(51) Int. Cl.: G07F 19/00, G06F 17/60

(54) **Method of processing electronic payment data and an apparatus therefor**

(30) Priority: 22.11.1999 US 444686
(71) Applicant: NCR INTERNATIONAL INC., Dayton, Ohio 45479 (US)
(72) Inventor: Doran, Wayne M., Kitchener, Ontario N2N 1P7 (CA); Fu, Zhongsu, Waterloo, Ontario N2K 3T8 (CA); Hassanein, Khaled S., Waterloo, Ontario (CA)
(74) Representative: Williamson, Brian

(57) **Abstract**

Electronic payment data is captured from a number of different types of electronic payment transactions. Certain electronic payment data from the captured electronic payment data is extracted, and then stored in a scalable data warehouse to allow a user to generate business-related information based upon the extracted electronic payment data.

## Description

The present invention relates to electronic payment data processing, and is particularly directed to a method of processing electronic payment data and an apparatus therefor.

There are numerous ways of carrying out an electronic payment transaction. One way of carrying out an electronic payment transaction is to use a debit card at a point-of-sale terminal such as an electronic cash register. Another way of carrying out an electronic payment transaction is to use a credit card at a point-of-sale terminal. Other known ways of carrying out an electronic payment transaction are to use a telephone, a home banking terminal, or a self-service terminal such as an automated teller machine.

In each way of carrying out an electronic payment transaction, there is usually a predefined format in which electronic payment data associated with the particular electronic payment transaction is organized. For example, in electronic payment data associated with a debit card payment transaction, there are usually a number of different fields including a card number field, an amount field, a payor field, a payee field, and a date field. It would be desirable to capture electronic payment data from many different types of electronic payment transactions and then to process the captured electronic payment data to provide useful information.

In accordance with one aspect of the present invention, a method of processing electronic payment data comprises the steps of (a) capturing electronic payment data from a number of different types of electronic payment transactions, (b) extracting certain data from the captured electronic payment data, and (c) storing the extracted electronic payment data of step (b) in a data warehouse to allow a user to generate business-related information based upon the extracted electronic payment data. Preferably, step (b) includes the step of filtering a selected number of fields associated with each type of electronic payment transaction, and step (c) includes the step of storing extracted electronic payment data in the data warehouse after the selected fields have been filtered out. Step (b) also includes the step of formatting electronic payment data into a file suitable for populating the data warehouse.

In accordance with another aspect of the present invention, an apparatus is provided for processing electronic payment data. The apparatus comprises a number of electronic payment terminals for allowing a user to carry out a first type of electronic payment transaction at one of the terminals and a second type of electronic payment transaction at one of the terminals. Means is provided for (i) capturing electronic payment data associated with the first type of transaction when a user carries out the first type of electronic payment transaction at one of the terminals, and (ii) capturing electronic payment data associated with the second type of transaction when a user carries out the second type of electronic payment transaction at one of the terminals.

Means is provided for extracting certain electronic payment data from captured electronic payment data. A data warehouse is provided for storing extracted electronic payment data to allow a user to generate business-related information based upon the extracted electronic payment data. Preferably, the extracting means includes means for filtering selected fields associated with each type of electronic payment transaction. The extracting means includes means for formatting electronic payment data into a format suitable for populating the data warehouse.

An embodiment of the present invention will now be described, by way of example, with reference to the accompanying drawings, in which:
Fig. 1 is a block diagram representation of a system having a number of different types of electronic payment terminals and embodying the present invention;
Fig. 2 is an enlarged portion of the block diagram of Fig. 1; and
Fig. 3 is a flowchart depicting a program for processing electronic payment data associated with a debit card payment transaction in accordance with the present invention.

The present invention is directed to a method of processing electronic payment data and an apparatus therefor. The electronic payment data may be from any type of electronic payment transaction, such as a debit card payment transaction or a credit card payment transaction.

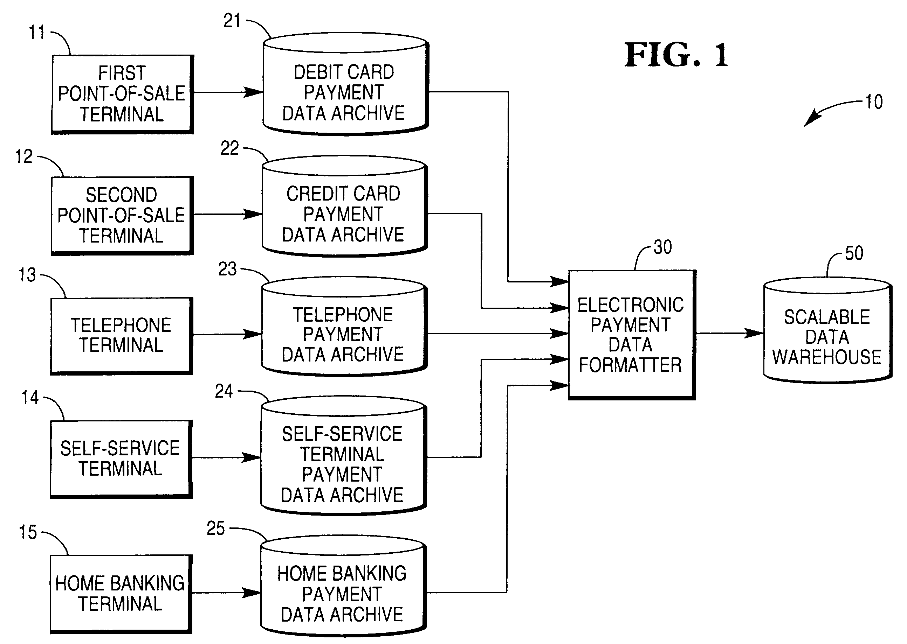

Referring to Fig. 1, a system 10 includes a number of different types of terminals at which an electronic payment transaction may be carried out. As shown in Fig. 1, the terminals include a first point-of-sale (POS) terminal 11 at which a debit card payment transaction may be carried out, a second POS terminal 12 at which a credit card payment transaction may be carried out, a telephone terminal 13 at which a telephone payment transaction may be carried out, a self-service terminal 14 such as an automated teller machine (ATM) at which a self-service payment transaction may be carried out, and a home banking terminal 15 at which a home banking payment transaction may be carried out. Each type of terminal at which an electronic payment transaction may be carried out includes respective known hardware and respective known software for enabling a user to carry out the respective type of electronic payment transaction.

The different terminals 11, 12, 13, 14, 15 have respective different payment data archives 21, 22, 23, 24, 25 associated therewith. A debit card payment data archive 21 is associated with the first POS terminal 11, a credit card payment data archive 22 is associated with the second POS terminal 12, a telephone payment data archive 23 is associated with the telephone terminal 13, a self-service terminal payment data archive 24 is associated with the self-service terminal 14, and a home banking payment data archive 25 is associated with the home banking terminal 15.

When an electronic payment transaction is carried out, electronic payment data associated with the electronic payment transaction is initially captured at the first POS terminal 11, the second POS terminal 12, the telephone terminal 13, the self-service terminal 14, or the home banking terminal 15, as the case may be.
Captured electronic payment data is then stored in the respective one of the electronic payment data archives 21, 22 23, 24, 25.

Although the above description describes capturing electronic payment data from the terminals 11, 12, 13, 14, 15 and storing the captured electronic payment data in the respective archives 21, 22, 23, 24, 25, it is contemplated that electronic payment data may be captured from other types of terminals and stored in other respective archives. Any of these other types of electronic payment data may be captured, stored in respective archives, and then processed in accordance with the present invention. For simplicity, only electronic payment data associated with a debit card payment transaction carried out at the first POS terminal 11 will be discussed in detail hereinafter.

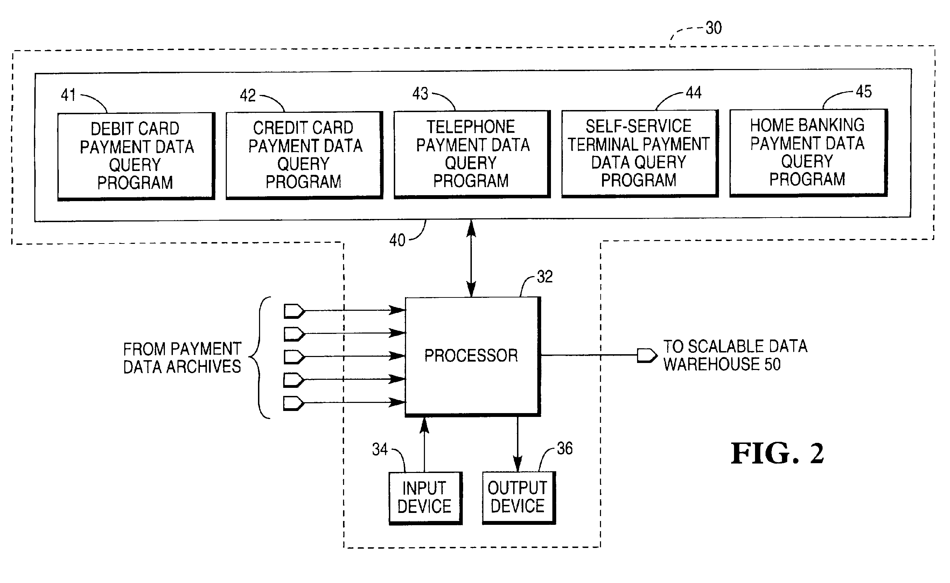

Referring to Figs. 1 and 2, an electronic payment data formatter 30 includes a processor 32 which retrieves electronic payment data from the payment data archives 21, 22, 23, 24, 25, processes the retrieved data, and then stores the processed data in a scalable data warehouse 50. Preferably, the processor 32 includes a microcomputer, and the scalable data warehouse 50 includes non-volatile storage memories such as hard disk drives, for example. Suitable microcomputers and memories are readily available in the marketplace. Their structure and operation are well known and, therefore, will not be described.

The electronic payment data formatter 30 further includes an input device 34 and an output device 36 which allows a user to control operation of the processor 32 and thereby to control processing of electronic payment data stored in the payment data archives 21, 22, 23, 24, 25 to provide useful extracted data which is eventually stored in the scalable data warehouse 50. The input device 34 may include a keyboard, a mouse, or a touch-sensitive screen, for examples. The output device 36 may include a CRT display, or a liquid crystal display, for examples.

The electronic payment data formatter 30 further includes a system memory 40 which stores, inter alia, a number of application programs including a debit card payment data query program 41, a credit card payment data query program 42, a telephone payment data query program 43, a self-service terminal payment data query program 44, and/or a home banking payment data query program 45. The debit card payment data query program 41 formats electronic payment data from the debit card payment data archive 21. The credit card payment data query program 42 formats electronic payment data from the credit card payment data archive 22. The telephone payment data query program 43 formats electronic payment data from the telephone payment data archive 23. The self-service terminal payment data query program 44 formats electronic payment data from the self-service terminal payment data archive 24. The home banking payment data query program 45 formats electronic payment data from the home banking payment data archive 25.

Different types of electronic payment data may be processed to provide useful extracted data in accordance with the present invention. As an example, electronic payment data associated with a debit card payment transaction may be processed to extract useful data. Extracted data is stored in the scalable data warehouse 50 to allow a user to generate business-related information based upon the extracted data. The business-related information may include marketing-related information useful for marketing purposes.

When a customer of a retail store carries out a typical debit card payment transaction with a retailer, the customer initially gives the retailer a debit card. The retailer then swipes the debit card through a debit card reader which has the retailer's identification code encoded therein. After the retailer enters the amount of the transaction, the customer validates the amount and selects the account type to which the transaction should be charged. When the customer and the retailer have completed the described actions, communication is established between the customer's bank (i.e., payor's bank) and the retailer's bank (i.e., the payee's bank) to allow the transaction to be completed.

Once the above-described transaction has been completed, each of the payor's bank and the payee's bank will be in possession of a file which contains electronic payment data relating to the particular transaction. The electronic payment data typically includes (i) date and time of the transaction, (ii) name of the payee, (iii) location of the payee, (iv) amount of the transaction, (v) card number of the payor, and (vi) type of account of the payor. The electronic payment data is processed in accordance with the present invention as described in detail hereinbelow.

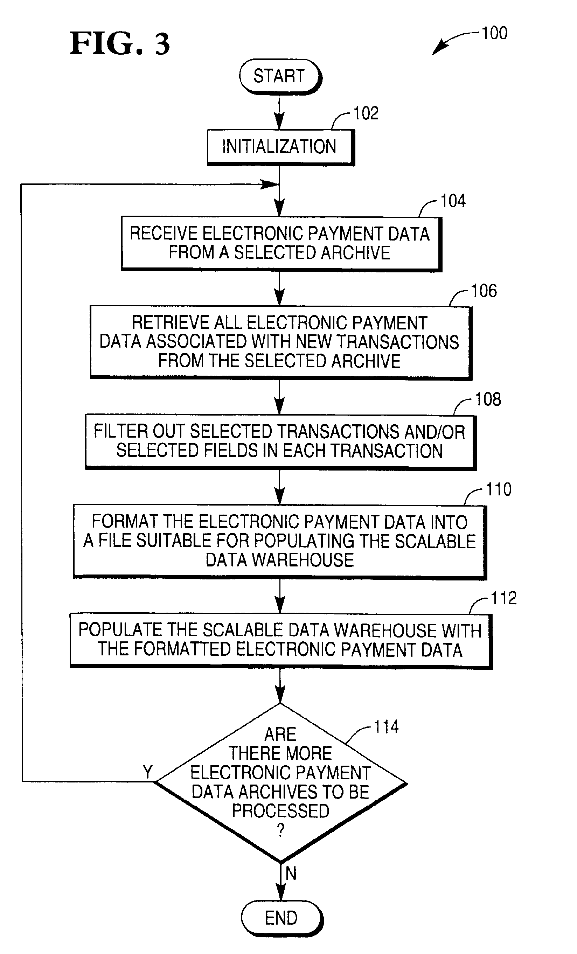

Referring to Fig. 3, a flowchart 100 depicts steps of the debit card payment data query program 41 for processing electronic payment data associated with a debit card payment transaction in accordance with the present invention. After program initialization as shown in step 102, the program proceeds to step 104 in which electronic payment data is received from a selected one of the payment data archives 21, 22, 23, 24, 25. Since the transaction is a debit card payment transaction, electronic payment data is retrieved from the debit card payment data archive 21. The program then proceeds to step 106 in which all electronic payment data associated with new transactions (i.e., only those which have not been previously processed) are retrieved from the debit card payment data archive 21.

The program proceeds to step 108 in which selected transactions and/or selected fields from the retrieved transactions of step 106 are filtered out and removed from further consideration. Then, in step 110, the remaining electronic payment data which has not been filtered out is formatted by the debit card payment data query program 41 into a file which is suitable for populating the scalable data warehouse 50. As shown in step 112, the formatted electronic payment data is populated into the scalable data warehouse 50.

The program then proceeds to step 114 in which a determination is made as to whether there are more payment data archives to be accessed and processed. If the determination in step 114 is affirmative, the program returns to step 104 to process electronic payment data from the next selected archive which may be one of the payment data archives 22, 23, 24, 25. However, if the determination in step 114 is negative, the program terminates.

It should be apparent that each of the payment data query programs 41, 42, 43, 44, 45 processes electronic payment data stored in the payment data archives 21, 22, 23, 24, 25 to provide useful extracted payment data which is formatted in a file suitable for populating the scalable data warehouse 50. Accordingly, the scalable data warehouse 50 stores certain payment data which has been extracted from a number of electronic payment transactions of different types.

A bank may use the payment data stored in the scalable data warehouse 50 in many different ways. For example, subject to privacy considerations, the payor's bank may use the payment data stored in the scalable data warehouse 50 to analyze spending patterns (such as payees, amounts, frequency, etc.) of their customers to create customers' needs profiles. These profiles may be used to selectively direct marketing and promotional messages to those customers who are likely to be most interested in the product(s) or service(s) being offered. This has an advantage to the customers in that they would receive only the marketing and promotional material they would more likely be interested in rather than being subjected to a large amount of material they may have little interest in.

From the above description of the invention, those skilled in the art to which the present invention relates will perceive improvements, changes and modifications. Numerous substitutions and modifications can be undertaken without departing from the scope of the invention.

## Claims

1. A method of processing electronic payment data, the method comprising the steps of:
(a) capturing electronic payment data from a number of different types of electronic payment transactions;
(b) extracting certain data from the captured electronic payment data; and
(c) storing the extracted electronic payment data of step (b) in a data warehouse to allow a user to generate business-related information based upon the extracted electronic payment data.

2. A method as claimed in claim 1, wherein step (b) includes the step of:
(b-1) filtering a selected number of fields associated with each type of electronic payment transaction.

3. A method as claimed in claim 2, wherein step (c) includes the step of:
(c-1) storing extracted electronic payment data in the data warehouse after the selected fields have been filtered out in step (b-1).

4. A method as claimed in any preceding claim, wherein step (b) comprises the step of:
(b-2) formatting electronic payment data into a file suitable for populating the data warehouse.

5. An apparatus for processing electronic payment data, the apparatus comprising:
a number of electronic payment terminals for allowing a user to carry out a first type of electronic payment transaction at one of the terminals and a second type of electronic payment transaction at one of the terminals;
means for (i) capturing electronic payment data associated with the first type of transaction when a user carries out the first type of electronic payment transaction at one of the terminals, and (ii) capturing electronic payment data associated with the second type of transaction when a user carries out the second type of electronic payment transaction at one of the terminals;
means for extracting certain electronic payment data from captured electronic payment data; and
a data warehouse for storing extracted electronic payment data to allow a user to generate business-related information based upon the extracted electronic payment data.

6. An apparatus as claimed in claim 5, wherein the extracting means includes means for filtering selected fields associated with each type of electronic payment transaction.

7. An apparatus as claimed in claim 5 or claim 6, wherein the extracting means includes means for formatting electronic payment data into a format suitable for populating the data warehouse.
